# EUROPÄISCHE PATENTANMELDUNG

(11) **EP 2 098 736 A1**
(43) Veröffentlichungstag der Anmeldung: **09.09.2009**
(21) Anmeldenummer: 08005097.4
(22) Anmeldetag: 19.03.2008
(51) Int. Cl.: F16B 13/14

(54) **System aus Verbundankerschraube und Klebstoff**

(30) Priorität: 07.03.2008 EP 08004246
(71) Anmelder: CCG-Concept Consulting GmbH, 30900 Wedemark (DE)
(72) Erfinder: Göttlich, Jutta, 30900 Wedemark (DE)
(74) Vertreter: Körner, Peter

(57) **Zusammenfassung**

Die Erfindung betrifft ein System aus Verbundankerschraube (10) und Klebstoff (12), bei welchem die Schraube (10) direkt in eine zumindest teilweise mit dem Klebstoff (12) versehene Bohrung (14), die in einem festen Verankerungsgrund (16) eingebracht ist, einschraubbar ist, wobei die Schraube (10) einen Schraubenkopf (18) mit einem Werkzeugangriff, einen im wesentlichen zylindrischen Schaft (20) und zwei oder mehr, vorzugsweise jedoch drei Gewindegänge (22, 24, 26) aufweist, die parallel zueinander angeordnet sind und sich helixförmig zumindest teilweise über die Länge des Schaftes (20) erstrecken, wobei der jeweilige Abstand (p1, p2, p3) zwischen den Gewindegängen (22, 24, 26) derart gewählt ist, dass sich der in der Bohrung (14) befindliche Klebstoff (12) beim Einschrauben der Schraube (10) in die Bohrung (14) gleichmäßig zwischen Wandung (32) der Bohrung (14) und Schraube (10) verteilt.

## Beschreibung

Die Erfindung betrifft ein System aus Verbundankerschraube und Klebstoff.

Um Anker, wie Gewindestangen, Armierungen oder andere Verankerungssysteme, in einem Verankerungsgrund zu verankern, ist es bekannt, zunächst ein Loch mittels einer Bohrmaschine in den Verankerungsgrund zu bohren. Anschließend wird das gebohrte Loch gereinigt und mit einem Klebstoff versehen. Der Klebstoff wird üblicherweise mittels einer Kartuschenpistole vom Bohrlochgrund her injiziert bei gleichzeitigem, langsamem Herausziehen der Kartuschenspitze. Dabei ist es unbedingt erforderlich, Lufteinschlüsse zu vermeiden. Für tiefe Bohrlöcher wird üblicherweise ein Verlängerungsschlauch zum Einbringen des Klebstoffs verwendet. Anschließend wird der Anker, beispielsweise die Gewindestange, Armierung oder das andere Verankerungssystem, mit Drehbewegung in das Bohrloch eingeführt. Das Verfahren ist aufwendig und birgt Gefahren, da bei einem zu schnellen Einführen Luftblasen am Metall des Ankers entstehen können, die wie Lunker beim metallischen Gießen die spätere Funktion und Sicherheit des Systems beeinträchtigen können.

Nachteilig an diesem System ist, dass die verwendeten Klebstoffe üblicherweise nicht feuerfest sind, so dass bei einem Brand, häufig auch schon bei geringer Hitzeentwicklung, die Anker und mithin die am Anker befestigten Gegenstände aus dem Verankerungsgrund fallen und immensen Schaden anrichten können.

Ferner dürfen die Anker nach ihren Setzen während der Aushärtungszeit des Klebstoffs, welche mehrere Stunden bis Tage betragen kann, auf keinen Fall bewegt oder belastet werden. Dies führt zu einer Verzögerung der nachfolgend durchzuführenden Arbeiten.

Bei Überkopfapplikationen ist zudem nachteilig häufig eine provisorische Fixierung des Ankers erforderlich, damit dieser während der Aushärtungszeit nicht schon aufgrund seines Eigengewichts aus dem Verankerungsgrund fällt.

Auch Vibrationen oder dynamische Lasten im Verankerungsgrund können nachteilig dazu führen, dass gehärtete Klebstoff samt Anker unter der dynamischen Last aus dem Verankerungsgrund fällt. Auch ein Kriechen des Klebstoffs bzw. ein Entspannen des gesamten Verankerungssystems kann zu einem Versagen des Trag- bzw. Lastverhaltens führen.

Ferner werden die Verankerungstiefen sehr lang gewählt, damit eine ausreichende Befestigung des Ankers mittels des Klebstoffs sichergestellt werden kann. Das schränkt die Anwendung solcher Systeme aus Anker und Klebstoff ein.

Ausgehend von diesem Stand der Technik liegt der Erfindung die Aufgabe zugrunde, die genannten Nachteile zu vermeiden und ein weiterentwickeltes System der eingangs genannten Art bereitzustellen, bei dem der Anker direkt nach dem Setzen belastbar ist.

Diese Aufgabe wird durch ein System aus Verbundankerschraube und Klebstoff gelöst, bei welchem die Schraube direkt in eine zumindest teilweise mit dem Klebstoff versehene Bohrung, die in einem festen Verankerungsgrund eingebracht ist, einschraubbar ist, wobei die Schraube einen Schraubenkopf mit einem Werkzeugangriff, einen im wesentlichen zylindrischen Schaft und zwei oder mehr, vorzugsweise jedoch drei Gewindegänge aufweist, die parallel zueinander angeordnet sind und sich helixförmig zumindest teilweise über die Länge des Schaftes erstrecken, wobei der jeweilige Abstand zwischen den Gewindegängen derart gewählt ist, dass sich der in der Bohrung befindliche Klebstoff beim Einschrauben der Schraube in die Bohrung gleichmäßig zwischen Wandung der Bohrung und Schraube verteilt.

Dadurch wird auf erstaunlich einfache Weise ein System zur Verfügung gestellt, bei dem der Anker in Form einer Verbundankerschraube sowohl stoffschlüssig mittels Klebstoffs als auch kraft- bzw. formschlüssig durch die schraubenartige Ausbildung des Ankers im Verankerungsgrund verankert ist. Durch diese Kombination aus chemischer und mechanischer Fixierung wird eine höhere Feuerfestigkeit erreicht, eine kürzere Einbaulänge ermöglicht und insbesondere eine sofortige Belastung des Ankers gewährleistet, ohne dass die Aushärtungszeit des Klebstoffs abgewartet werden muss. Das Kriechen des Klebstoff wird deutlich verringert, da ein Großteil der Ankerlast von den Gewindegängen auf den Verankerungsgrund übertragen wird.

Durch die besondere Ausgestaltung der Verbundankerschraube wird erreicht, dass sich der Klebstoff weitgehend lunkerfrei, also ohne Lufteinschlüsse, im Zwischenraum zwischen Wandung der Bohrung und der Schraube verteilt. Hierfür ist der sich beim Einschrauben der Verbundankerschraube innerhalb der Bohrung einstellende hydropneumatische Druck verantwortlich, der insbesondere dazu führt, dass der Klebstoff beim weiteren Einschrauben entgegen der Setzrichtung in Richtung Bohrungsöffnung gedrückt wird, wobei sich der Klebstoff, insbesondere auch wegen der Ausgestaltung der Verbundankerschraube, gleichmäßig verteilt, und so eine sehr gute Flächenhaftung zwischen Wandung und Klebstoff einerseits und zwischen Schraube und Klebstoff andererseits gewährleistet wird.

Der Begriff "fester Verankerungsgrund" ist weit gefasst. Neben Beton, Natur- oder Kunststein, Fels, Mauerwerk oder dergleichen Werkstoff wird unter einem festen Verankerungsgrund beispielsweise auch ein bröckeliges Mauerwerksmaterial, weicher Ziegelstein oder ein anderer weicher Stein verstanden. Auch Holz kann einen festen Verankerungsgrund bilden. Bevorzugt ist Gasbeton als fester Verankerungsgrund.

Eine Weiterbildung der Erfindung sieht vor, dass die Gewindegänge unterschiedliche Außendurchmesser aufweisen. Weiterhin ist vorgesehen, dass der Außendurchmesser eines ersten Gewindeganges größer ist als der Außendurchmesser des in Setzrichtung dem ersten Gewindegang folgenden zweiten Gewindeganges, und der Außendurchmesser des zweiten Gewindeganges größer ist als der Außendurchmesser des in Setzrichtung dem zweiten Gewindegang folgenden dritten Gewindeganges.

Es hat sich als vorteilhaft herausgestellt, dass der zweite und dritte Gewindegang, die jeweils einen geringeren Außendurchmesser als der erste Gewindegang aufweisen, diejenigen Gewindegänge sind, die als erste in die Wandung der Bohrung einschneiden und entsprechend die Hauptbelastung beim Einschrauben der Schraube in die Bohrung aufnehmen. Der erste Gewindegang, also der mit dem größten Außendurchmesser wird beim Einschrauben dagegen am wenigstens belastet und schneidet entsprechend wenig beansprucht in die Wandung der Bohrung ein. Der Gewindegang mit dem größten Durchmesser wird mithin vor Beschädigung geschont. Erst nach dem Einschrauben der Schraube entfaltet der erste Gewindegang, also der Gewindegang mit dem größten Außendurchmesser, seine Wirkung, und überträgt Haltekräfte in die Wandung der Bohrung, also in den festen Verankerungsgrund. Dadurch, dass sich der Gewindegang mit dem größten Außendurchmesser am tiefsten in die Wandung der Bohrung einschneidet, wird die Kraftübertragung von der Schraube auf den Verankerungsgrund verbessert.

Gleichwohl übertragen auch die anderen Gewindegänge Haltekräfte in die Wandung der Bohrung, so dass die Kräfte insgesamt besser verteilt in die Wandung der Bohrung übertragen werden.

Der Klebstoff wird dadurch entlastet und das nachteilige Kriechen deutlich verringert.

Der Außendurchmesser eines Gewindeganges wird über den Gewindegrat gemessen. Jeder Gewindegang weist einen gleich bleibenden Außendurchmesser über die Länge des Schaftes auf. Vorzugsweise ist jeder Gewindegang als Spitzgewinde mit abgeflachter Spitze ausgebildet.

Eine vorteilhafte Ausgestaltung der Erfindung sieht vor, dass die Steigung des Gewindebandes derart gewählt ist, dass ein derart großer gewindefreier Bereich zwischen Schaft und Wandung entsteht, dass eine optimale Adhäsion zwischen Klebstoff und Schraube sowie zwischen Klebstoff und Wandung sichergestellt wird.

Die unterschiedlichen Abstände der vorzugsweise drei Gewindegänge zueinander verbessern insbesondere im Zusammenspiel mit den unterschiedlichen Außendurchmessern der Gewindegänge nicht nur die Kraftübertragung von der Schraube auf den Verankerungsgrund, sondern stellen auch sicher, dass der Klebstoff beim Einschrauben der Schraube in die Bohrung zunächst in Richtung Bohrgrund gedrückt wird, wobei Luft entweicht, und anschließend entgegen der Setzrichtung entlang der Gewindegänge entgegen der Setzrichtung wandert und sich dabei gleichmäßig zwischen Wandung der Bohrung und der Schraube verteilt.

Vorzugsweise wird dabei auch das so genannte Bohrmehl, das beim Schneiden der Gewindegänge in die Wandung der Bohrung entsteht, entgegen der Setzrichtung aus der Bohrung gefördert. Dadurch wird verhindert, dass das Bohrmehl auf die Wandung der Bohrung drückt und es zu ungewünschten Spannungen innerhalb der Wandung kommt. Zudem wird ein verbesserter Kontakt zwischen Klebstoff und Wandung sowie zwischen Klebstoff und Schraube hergestellt.

Der Abstand des ersten Gewindeganges zum zweiten Gewindegang ist vorzugsweise größer als der Abstand des zweiten Gewindeganges zum dritten Gewindegang.

Insgesamt hat sich herausgestellt, dass durch wenigstens drei Gewindegänge im Zusammenspiel mit den unterschiedlichen Abständen der Gewindegänge zueinander auch weniger Spannungen im Verankerungsgrund entstehen. Insbesondere bei weichem oder bröckeligem Verankerungsgrund, bevorzugt bei Gasbeton, lässt sich so der Abstand von nebeneinander angeordneten Bohrungen im Verankerungsgrund verringern. Die Anzahl von Bohrungen auf einer gegebenen Flächeneinheit kann also vorteilhaft erhöht werden.

Zweckmäßigerweise bilden die Gewindegänge eine Art Gewindeband, das sich helixförmig zumindest teilweise über die Länge des Schaftes erstreckt, wobei die Steigung des Gewindebandes mindestens eine Bandbreite beträgt.

Dies hat sich als günstig für eine hohe Haltekraft der Schraube im festen Verankerungsgrund herausgestellt.

Eine vorteilhafte Ausgestaltung der Erfindung sieht vor, dass jeder Gewindegang einen vom anderen Gewindegang unterschiedlichen Flankenwinkel aufweist, wobei der Flankenwinkel vorzugsweise mit dem Außendurchmesser des Gewindeganges korreliert, derart, dass bei einem kleineren Außendurchmesser ein größerer Flankenwinkel vorgesehen ist und umgekehrt.

Als besonders günstig hat sich für den ersten Gewindegang ein Flankenwinkel von 8 bis 30°, für den zweiten Gewindegang von 16 bis 40° und für den dritten Gewindegang von 24 bis 45° herausgestellt.
Bei einem bevorzugten Ausführungsbeispiel weist der erste Gewindegang einen Flankenwinkel von 28°, der zweite Gewindegang einen Flankenwinkel von 33° und der dritte Gewindegang einen Flankenwinkel von 40° auf.

Gemäß einer Weiterbildung der Erfindung ist vorgesehen, dass die Außendurchmesser der Gewindegänge derart bemessen sind, dass sich die Gewindegänge beim Einschrauben in die Wandung der Bohrung eingraben und furchen.

Das bedeutet, dass der Durchmesser der Bohrung kleiner als der Außendurchmesser des kleinsten Gewindeganges ist, so dass sich auch der Gewindegang mit dem kleinsten Außendurchmesser in die Wandung der Bohrung einschneidet und zum Halt der Schraube im festen Verankerungsgrund beiträgt.

Vorzugsweise ist der Klebstoff ein chemisch härtender Klebstoff, besonders bevorzugt ein Epoxidharz-Klebstoff, ein Methylmethacrylat-Klebstoff oder ein Polyester-Klebstoff.

Eine vorteilhafte Ausgestaltung der Erfindung sieht vor, dass der Abstand zwischen der Wandung der Bohrung und dem Kerndurchmesser des eingeschraubten Schaftes 0,1 bis 1 mm, vorzugsweise 0,3 bis 1 mm beträgt.

Nachfolgend wird die Erfindung anhand eines Ausführungsbeispiels erläutert, das in der Zeichnung dargestellt ist. In dieser zeigt
- Fig. 1: in Querschnittsansicht eine Verbundankerschraube des erfindungsgemäßen Systems und
- Fig. 2: in Seitenansicht ein erfindungsgemäßes System aus Verbundankerschraube und Klebstoff, eingebracht in eine Bohrung.

In beiden Figuren bezeichnen gleiche Bezugszeichen gleiche Bauteile.

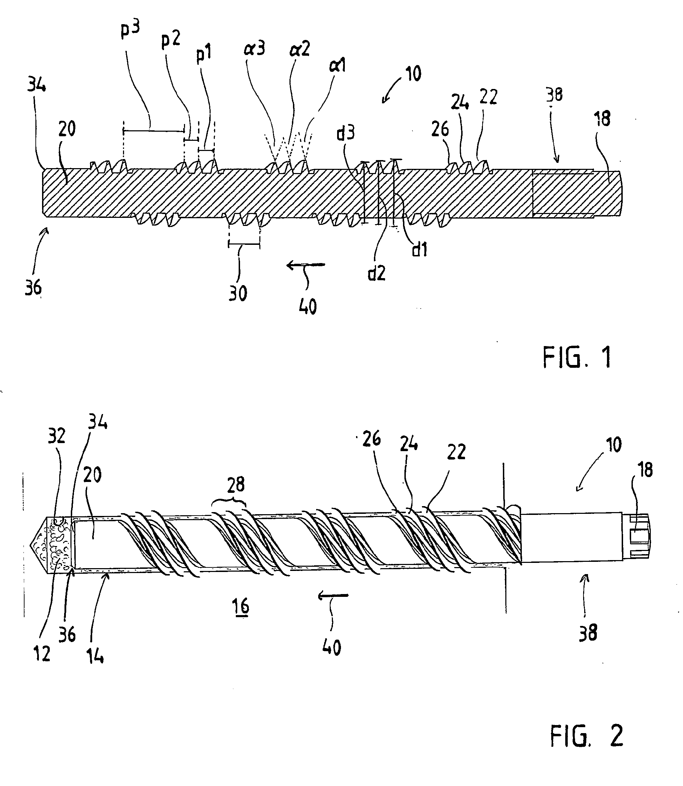

Die in Fig. 1 dargestellte Verbundankerschraube 10 weist eine kegelstumpfförmig leicht verjüngte Spitze 34 an einem vorderen Schraubenende 36 und einen Schraubenkopf 18 an einem hinteren Schraubenende 38 auf. Die kegelstumpfförmig verjüngte Spitze 34 erleichtert das Einführen der Verbundankerschraube 10 in die in Fig. 2 dargestellte Bohrung 14. Im dargestellten Ausführungsbeispiel ist der Schraubenkopf 18 in einem beispielhaften Werkzeugangriff ausgebildet; diese Kopfform ist vorteilhaft, aber nicht zwingend.

Die Verbundankerschraube 10 weist drei Gewindegänge 22, 24, 26 auf, die parallel zueinander angeordnet sind und sich helixförmig über die Länge des Schaftes 20 erstrecken.

Die Gewindegänge 22, 24, 26 weisen unterschiedliche Außendurchmesser d1, d2, d3 auf. Der Außendurchmesser d1 eines ersten Gewindeganges 22 ist größer als der Außendurchmesser d2 des in Setzrichtung 40 dem ersten Gewindegang 22 folgenden zweiten Gewindeganges 24.

Der Außendurchmesser d2 des zweiten Gewindeganges 22 ist größer als der Außendurchmesser d3 des in Setzrichtung 40 dem zweiten Gewindegang 24 folgenden dritten Gewindeganges 26.

Der Abstand p1, p2 und p3 der Gewindegänge 22, 24, 26 zueinander ist unterschiedlich.

Die Außendurchmesser d1, d2, d3 sind jeweils größer als der Innendurchmesser der Bohrung 14, so dass sich beim Einschrauben der Verbundankerschraube 10 in die in Fig. 2 dargestellte Bohrung 14 alle Gewindegänge 22, 24, 26 in die Wandung 32 der Bohrung 14 einschneiden.

Die Gewindegänge 22, 24, 26 bilden eine Art Gewindeband 28, das sich helixförmig über die Länge des Schaftes 20 erstreckt, wobei die Steigung des Gewindebandes 28 mindestens eine Bandbreite 30 beträgt.

Die Steigung der Verbundankerschraube 10 ist der Abstand von einer Windung eines Gewindeganges 22, 24 oder 26 bis zur folgenden Windung desselben Gewindegangs 22, 24 oder 26, also die Summe der Abstände p1, p2 und p3 der Gewindegänge 22, 24 und 26, voneinander.

Die Bandbreite 28 ist entsprechend die Summe der Abstände p1 und p2 der Gewindegänge 22 und 24 sowie 24 und 26.

Jeder Gewindegang 22, 24 und 26 weist einen vom anderen Gewindegang 22, 24 und 26 unterschiedlichen Flankenwinkel α1, α2 und α3 auf, der mit zunehmendem Außendurchmesser kleiner wird.

Das hintere Schraubenende 38, welches bevorzugt ein hier nicht dargstelltes eingängiges Gewinde aufweist, verbleibt außerhalb der Bohrung 14 und dient der Befestigung eines Gegenstandes, beispielsweise durch Aufschrauben einer hier nicht dargestellten Mutter.

In Fig. 2 ist die Verbundankerschraube 10 in eine mit einer vorgegebenen Menge an Klebstoff 12 versehene Bohrung 14 eines festen Verankerungsgrundes 16 eingeschraubt. Der Klebstoff 12 hat sich hierbei gleichmäßig zwischen Schraube 10 und Wandung 32 der Bohrung 14 verteilt.

Selbstverständlich ist die Erfindung nicht auf das Ausführungsbeispiel beschränkt, sondern im Rahmen der Offenbarung vielfach variabel.

### Bezugszeichenliste

### (ist Teil der Beschreibung)

- 10: Schraube
- 12: Klebstoff
- 14: Bohrung
- 16: Verankerungsgrund
- 18: Schraubenkopf
- 20: Schaft
- 22: 1. Gewindegang
- 24: 2. Gewindegang
- 26: 3. Gewindegang
- 28: Gewindeband
- 30: Bandbreite
- 32: Wandung
- 34: Spitze
- 36: vorderes Schraubenende
- 38: hinteres Schraubenende
- 40: Setzrichtung

- d1: 1. Außendurchmesser
- d2: 2. Außendurchmesser
- d3: 3. Außendurchmesser

- p1: 1. Abstand
- p2: 2. Abstand
- p3: 3. Abstand

- α1: 1. Flankenwinkel
- α2: 2. Flankenwinkel
- α3: 3. Flankenwinkel

## Patentansprüche

1. System aus Verbundankerschraube (10) und Klebstoff (12), bei welchem die Schraube (10) direkt in eine zumindest teilweise mit dem Klebstoff (12) versehene Bohrung (14), die in einem festen Verankerungsgrund (16) eingebracht ist, einschraubbar ist, wobei die Schraube (10) einen Schraubenkopf (18) mit einem Werkzeugangriff, einen im wesentlichen zylindrischen Schaft (20) und zwei oder mehr, vorzugsweise jedoch drei Gewindegänge (22, 24, 26) aufweist, die parallel zueinander angeordnet sind und sich helixförmig zumindest teilweise über die Länge des Schaftes (20) erstrecken, wobei der jeweilige Abstand (p1, p2, p3) zwischen den Gewindegängen (22, 24, 26) derart gewählt ist, dass sich der in der Bohrung (14) befindliche Klebstoff (12) beim Einschrauben der Schraube (10) in die Bohrung (14) gleichmäßig zwischen Wandung (32) der Bohrung (14) und Schraube (10) verteilt.

2. System nach Anspruch 1, **dadurch gekennzeichnet, dass** die Gewindegänge (22, 24, 26) unterschiedliche Außendurchmesser (d1, d2, d3) aufweisen.

3. System nach Anspruch 1 oder 2, **dadurch gekennzeichnet, dass** der Außendurchmesser (d1) eines ersten Gewindeganges (22) größer ist als der Außendurchmesser (d2) des in Setzrichtung (40) dem ersten Gewindegang (22) folgenden zweiten Gewindeganges (24), und der Außendurchmesser (d2) des zweiten Gewindeganges (24) größer ist als der Außendurchmesser (d3) des in Setzrichtung (40) dem zweiten Gewindegang (24) folgenden dritten Gewindeganges (26).

4. System nach einem der Ansprüche 1 bis 3, **dadurch gekennzeichnet, dass** der Abstand (p1, p2, p3) der Gewindegänge (22, 24, 26) zueinander unterschiedlich ist.

5. System nach einem der Ansprüche 1 bis 4, **dadurch gekennzeichnet, dass** die Gewindegänge (22, 24, 26) eine Art Gewindeband (28) bilden, das sich helixförmig zumindest teilweise über die Länge des Schaftes (20) erstreckt, wobei die Steigung des Gewindebandes (28) vorzugsweise mindestens eine Bandbreite (30) beträgt.

6. System nach einem der Ansprüche 1 bis 5, **dadurch gekennzeichnet, dass** die Steigung des Gewindebandes derart gewählt ist, dass ein derart großer gewindefreier Bereich zwischen Schaft und Wandung entsteht, dass eine optimale Adhäsion zwischen Klebstoff und Schraube sowie zwischen Klebstoff und Wandung sichergestellt wird.

7. System nach einem der Ansprüche 1 bis 6, **dadurch gekennzeichnet, dass** jeder Gewindegang (22, 24, 26) einen vom anderen Gewindegang (22, 24, 26) unterschiedlichen Flankenwinkel (α1, α2, α3) aufweist.

8. System nach einem der Ansprüche 1 bis 7, **dadurch gekennzeichnet, dass** die Außendurchmesser (d1, d2, d3) der Gewindegänge (22, 24, 26) derart bemessen sind, dass sich die Gewindegänge (22, 24, 26) beim Einschrauben in die Wandung (32) der Bohrung (14) eingraben und furchen.

9. System nach einem der Ansprüche 1 bis 8, **dadurch gekennzeichnet, dass** der Klebstoff (12) ein chemisch härtender Klebstoff, vorzugsweise ein Epoxidharz-Klebstoff, ein Methylmethacrylat-Klebstoff oder ein Polyester-Klebstoff ist.

10. System nach einem der Ansprüche 1 bis 9, **dadurch gekennzeichnet, dass** der Abstand zwischen der Wandung (32) der Bohrung (14) und dem Kerndurchmesser des eingeschraubten Schaftes (20) 0,1 bis 1 mm, vorzugsweise 0,3 bis 1 mm, besonders bevorzugt 0,7 bis 1 mm beträgt.
